(19) **Europäisches Patentamt**
**European Patent Office**
**Office européen des brevets**

(11) **EP 1 776 200 B1**

(12) **EUROPEAN PATENT SPECIFICATION**

(45) Date of publication and mention
of the grant of the patent:
**13.01.2010 Bulletin 2010/02**

(51) Int Cl.:
*B21D 39/00* (2006.01)     *B23P 11/00* (2006.01)
*H01C 7/12* (2006.01)

(21) Application number: **05747292.0**

(22) Date of filing: **03.06.2005**

(86) International application number:
**PCT/GB2005/002198**

(87) International publication number:
**WO 2006/000743 (05.01.2006 Gazette 2006/01)**

(54) **A METHOD OF MANUFACTURING A CRIMPED ASSEMBLY, AND RELATED ASSEMBLY AND APPARATUS**

VERFAHREN ZUR HERSTELLUNG EINER GECRIMPTEN ANORDNUNG UND VERBUNDENE ANORDNUNG UND VORRICHTUNG

PROCEDE PERMETTANT LA PRODUCTION D'UN ENSEMBLE SERTI, ET ENSEMBLE ET APPAREIL CONNEXES

(84) Designated Contracting States:
**AT BE BG CH CY CZ DE DK EE ES FI FR GB GR HU IE IS IT LI LT LU MC NL PL PT RO SE SI SK TR**
Designated Extension States:
**HR YU**

(30) Priority: **24.06.2004 GB 0414131**

(43) Date of publication of application:
**25.04.2007 Bulletin 2007/17**

(73) Proprietor: **Tyco Electronics Raychem Ireland Shannon, Co Clare (IE)**

(72) Inventors:
• **NORMOYLE, Brendan**
**Limerick, Co. Limerick (IE)**

• **CURRAN, Padraic**
**Windsor, CA 95492 (US)**

(74) Representative: **Grünecker, Kinkeldey, Stockmair & Schwanhäusser Anwaltssozietät Leopoldstrasse 4 80802 München (DE)**

(56) References cited:
WO-A-01/15292      US-A- 2 226 849
US-A- 2 327 683      US-A- 2 889 603
US-A- 2 965 147      US-A- 3 192 622
US-A- 4 656 720      US-A- 5 680 289

## Description

This invention relates to a method of manufacturing a crimped assembly, and related assembly and apparatus.

The process of crimping is widely used in the manufacture of eg. electrical insulators and surge arresters.

In such technologies it is known to use a process known as "centred crimping" to manufacture electrical insulators.

In one form of this prior art method, an electrically insulating glass fibre rod is pushed into the centre of a hollow, cylindrical, metal end-fitting having an open aperture. The aperture defines a clearance that is only slightly larger than the diameter of the glass fibre rod.

The metal wall of the end fitting is then crimped, or pressed under hydraulic pressure, onto the rod using hardened metal dies. The end fitting is as a result strongly bonded to the insulator rod. The bond between the components can withstand high forces, such as the tension and weight of overhead power lines in the span between adjacent structures in an electrical distribution network.

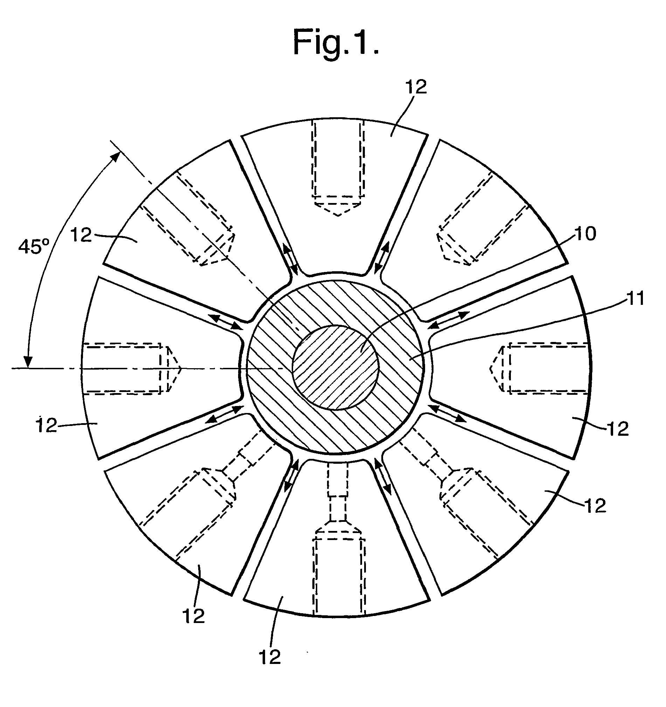

Figure 1 shows the glass fibre rod 10, a cylindrical metal end fitting 11 and crimping dies 12 of the above-described centred crimping method, in which the dies 12 are moveable radially in the directions of the arrows in order to effect deformation of the end fitting 11.

There are however requirements to crimp end fittings onto eg. insulating rods, in an off-centre manner.

Such requirements commonly arise in the manufacture of surge arresters.

Surge arresters are used to protect equipment connected to power distribution networks from damage by excessive voltage situations caused by lightning strikes, switching surges, incorrect connections, and other abnormal conditions or malfunctions.

The active element in a surge arrester is a varistor, also referred to as a non-linear resistor because it exhibits a non-linear current-voltage relationship. If the applied voltage is less than a certain voltage (the switching or clamping voltage) the varistor is essentially an insulator and only a small leakage current flows through it. If the applied voltage is greater than the switching voltage the varistor's resistance drops, allowing an increased current to flow through it. That is, a varistor is highly resistive below its switching voltage and substantially conductive above it. The voltage-current relationship of a varistor is described by the equation

$$ I = \left(\frac{V}{C}\right)^{\alpha} $$

Where I is the current flowing the varistor; V is the voltage across the varistor; C is a constant which is a function of the dimensions, composition, and method of fabrication of the varistor; and α (alpha) is a constant which is a measure of the non-linearity of the varistor. A large α, signifying a large degree of non-linearity, is desirable.

The surge arrester is commonly attached to an electrical power system in a parallel configuration, with one terminal of the device connected to a phase conductor of the electrical power system and the other terminal to ground or neutral. At normal system voltages, the surge arrester is resistant to current flow (except for the leakage current). If an over-voltage condition exceeding the switching voltage develops, the surge arrester becomes conductive and shunts the surge energy to a value while "clamping" or limiting the system voltage to a value which can be tolerated, without damage, by the equipment being protected.

The mechanical strength and integrity of the surge arrester can be achieved by assembling the core of the arrester from a single varistor element or a stack of varistor elements held between two end terminals by a plurality of elongate strength members disposed therearound. The ends of the strength members are inserted into recesses in the end terminals. Crimping of the end terminals distorts the recesses sufficiently to hold the strength members firmly therewithin (as disclosed in US Patent No. 5,680,289, on which the preamble of the independent claims is based).

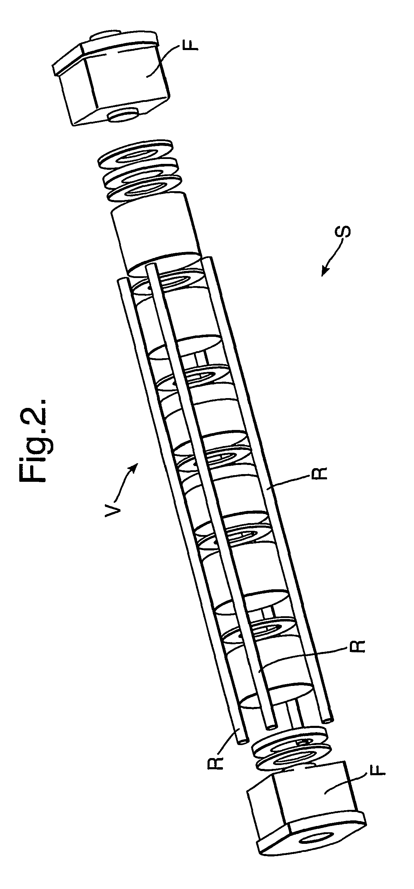

Figure 2 is an exploded view showing the components of one type of surge arrester S.

In Figure 2 the components of the surge arrester S when assembled together comprise four elongate glass reinforced polymer rods R that are at each end received in respective apertures located adjacent the corners of respective, essentially square end fittings F.

The end fittings F are crimped onto the rods R.

In the space between the end fittings F lies a series of cylindrical elements defining a varistor V of the aforementioned type. The assembly process for the surge arrester S is such that the rods are under tension after crimping, which occurs while the end fittings F are compressed to press the components of the varistor V together.

This is achieved by way of the arrester S including in its structure one or more springs acting between the fittings F. The springs (which typically are disc springs) tend to lengthen the overall assembly. The rods R resist such lengthening.

Since in addition the elements of the varistor V are contained within a cage defined by the rods R the surface arrester S as a whole possesses good structural integrity.

However as described below excessive crimping during the manufacturing process crushes the glass fibre / matrix of the load bearing members and greatly diminishes the mechanical performance of the product.

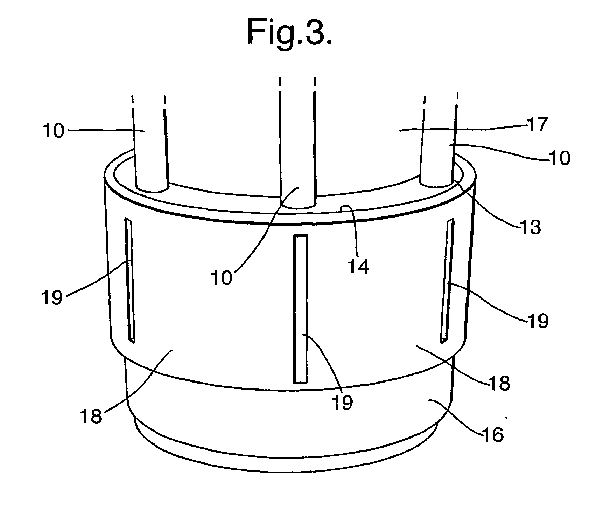

Figure 3 shows the result of practising the method of US Patent No. 5,680,289 on a cylindrical end fitting 16 during manufacture of a surge arrester of similar design to that shown in Figure 2. In Figure 3, a circular array of the glass fibre rods 10 is inserted into a series of apertures 13 formed in an end face 14 of a cylindrical end fitting 16 that supports a stack of varistor elements 17.

In accordance with the method of US 5,680,289, regions 18 of the exterior of end fitting 16 are deformed by dies that are similar to dies 12 of Figure 1, in order to crimp the end fitting 16 onto the inserted ends of the other protruding rods 10, at each aperture 13.

The extent of the deformation in each region 18 is essentially uniform along its length.

The gaps between adjacent dies used for forming the deformed regions 18 result in ridges 19 spacing the regions 18 from one another.

The example of Figure 3 therefore relates to off-centred crimping, as compared with the centred crimping of Figure 1. When attempting to use the known crimping apparatuses for off-centre crimping it becomes considerably more difficult, than when using the apparatus in the "centred" configuration of Figure 1, to achieve a uniform gripping or crimping pressure acting around the circumference of the insulating rods 10 inserted into the apertures.

This problem manifests itself as (undesirable) peaks in the contact pressure acting on the load-bearing member. These can cause the aforesaid crushing of the glass fibre / matrix material of the load-bearing members..

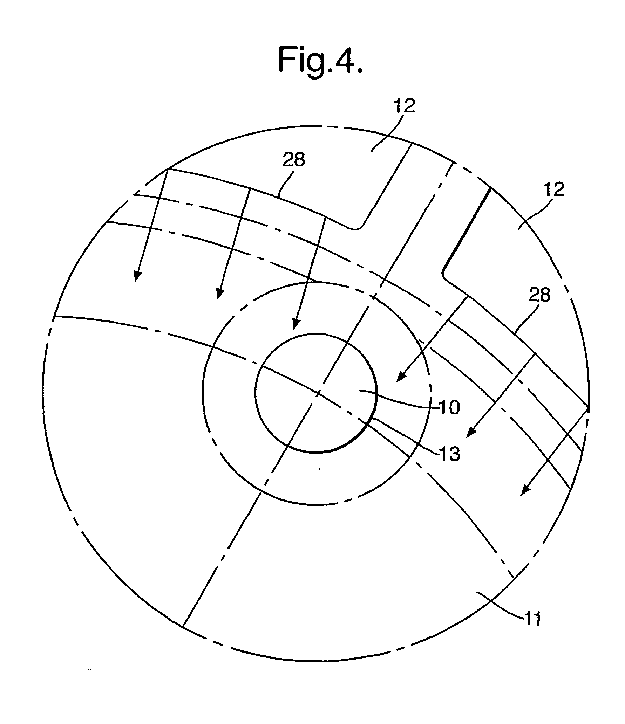

The problem is illustrated schematically in Figure 4, which shows in enlarged view two conventional dies 12 acting to effect off-centre crimping of a rod 10 received in an aperture 13 of an end fitting 11, during manufacture of the Figure 3 sub-assembly.

As is visible in Figure 4, each hardened die 12 has a contact face 28. This causes deformation of the metal of the end fitting on advancing of the dies into the fitting.

Since as shown each contact face 28 is of essentially the same shape as the part of the periphery of the end fitting 11 that it engages, the deformation of the end fitting is essentially invariant over the lengths of the periphery contacted by the contact faces. This in turn leads to unbalanced contact pressure acting on the rod 10 (as signified by the arrows in Figure 4), thereby causing the aforesaid problems.

WO-A-01/15292 attempts to solve this problem in the manufacture of a surge arrester, by crimping onto the ends of the load-bearing members 10 respective, frusto-conical bracing cylinders. These may be applied using the centre crimping method exemplified by Figure 1. On assembly of the surge arrester the bracing cylinders are received in tapered apertures in the end fittings, such that tension in the load-bearing members drives the bracing cylinders into the apertures.

This method of arranging the components of a surge arrester, however, only enjoys mechanical integrity while under tension. The surge arrester could be disassembled when compressed.

Furthermore, the need separately to crimp, at each end of each load-bearing member, a bracing cylinder adds to the complexity and cost of the manufacturing operation.

Other prior art methods of making surge arresters, involving the use of pressure screws to tension the load-bearing members; and the forming of loops in the ends of the load-bearing members, are unacceptably complicated. Thus there is a need for methods and apparatuses that improve the mechanical performance of products such as surge arresters, without compromising in terms of cost or complexity.

According to a first aspect of the invention there is provided a method of crimping a load-bearing member and a first fitting of a surge arrester together in which the load-bearing member lies displaced from the centroid of the cross-section of the first fitting when they have been crimped, the method comprising the steps of inserting a load-bearing member into an aperture, defined by a wall, in the said fitting; and advancing one or more deformation tools to deform the perimeter of the fitting and thereby deform the wall of the aperture into gripping engagement with the load-bearing member, the extent of the resulting deformation of the perimeter of the fitting over a predetermined length thereof varying in proportion to the distance along the said length from the load-bearing member.

This method is applicable to various kinds of off-centre crimping including but not limited to the steps in the manufacture of surge arresters.

For the avoidance of ambiguity, the term "load-bearing member" is used herein to denote members such as the rods R of Figure 2, of a surge arrester requiring crimping in order to retain them in the end fittings.

When the surge arrester is assembled (ie. such that the end fittings compress the varistor elements) such rods are under tension (and hence are load-bearing).

However the invention as claimed herein is not limited to members that are in tension or compression, and it embraces for example members that are subject to no loading caused by external forces. On the contrary, the term "load-bearing member" is used merely for convenience since in the majority of surge arresters the elongate rods will be under tension most of the time.

Also for the avoidance of doubt the term "length" as used herein with reference to the wall of an aperture means a length on the exterior periphery of a said fitting that is contacted by a said deformation tool during practising of a method defined herein as according to the invention. Thus in the case of a cylindrical fitting the length is measured circumferentially.

However the variation in the extent of deformation need not depend solely on the distance, around the perimeter (outer periphery) of the fitting, that is contacted by a deformation tool. On the contrary, other variables such as the shape or profile of the fitting eg. in the region contacted by the deformation tool, may influence this effect.

The step of causing variation in the extent of deformation in dependence on the length from the load-bearing member advantageously renders more uniform than in the prior art methods the contact pressure acting around the load-bearing member. Thus the method of the invention increases the average pressure applied via the crimp, without exceeding the crimp threshold at which damage typically starts to occur to the load-bearing member. The resulting increase in the crimp threshold that is usable in the method of the invention allows the creation of a considerably stronger crimp, using an off-centre crimping technique than has hitherto been the case.

Conveniently the or each said deformation tool includes a contact face for contacting the said fitting, which contact face is profiled and/or aligned relative to the said fitting so as to produce the said varying deformation.

Preferably the or each said deformation tool includes a contact face for contacting the load bearing member, the contact face including at least one protuberance that protrudes relative to a further portion thereof, whereby to cause the said variation in the extent of the resulting deformation.

In another preferred aspect of the method of the invention the contact face includes at least two protuberances, the said protuberances being separated from one another by at least one recess.

In yet a further variant of the method of the invention the wall of the aperture is generally smooth in the region that is contactable by the contact face.

Alternatively the wall of the aperture includes one or more protuberances in the region that is contactable by the contact face.

Each of the foregoing arrangements advantageously assists in providing for the aforesaid variation in the extent of deformation. In particular when (as is commonly the case) the first fitting is made of metal, such features of the method allow for metal flow that assists in providing as uniform a gripping force as possible.

Preferably the method of the invention includes the steps of:

> inserting a plurality of load-bearing members into a corresponding plurality of apertures in the first fitting, defining a corresponding plurality of the walls; and advancing one or more deformation tools to deform the said perimeter so that the walls grippingly engage with respective said load-bearing members, wherein the extent of the resulting deformation of the said perimeter over respective predetermined lengths thereof caused by the respective deformation tools varies in dependence on the distance along the said length from the load-bearing member to which it is nearest.

The steps of inserting a plurality of load-members and crimping each of them according to the principle of variation of the extent of deformation with distance from the load-bearing member allows use of the method of the invention in the manufacture of a practical surge arrester. As noted herein, however, in its broadest form the invention is not limited to use of the method in the manufacture of such a device.

Conveniently, in accordance with the method of the invention the or each deformation tool is or includes a pressing die. However, other forms of deformation tool are possible within the scope of the invention.

Preferably, following insertion into a said aperture, the or each said load-bearing member partly protrudes from the said first fitting.

This aspect of the method is advantageously suited to the manufacture of surge arresters.

Preferably over the or each said predetermined length the extent of the deformation caused by each deformation tool increases in proposition to the distance from, as appropriate, the said load-bearing member; or the said load-bearing member to which it is nearest.

This precise arrangement of the variation in the extent of deformation has been found to be particularly suitable for tending to equalise the contact pressure peaks when the load-bearing member and the aperture in which it is inserted are each of circular cross-section. However, other patterns of deformation variation may be possible within the scope of the invention.

The method further includes the optional refinement of causing spacing of the deformation caused by each said deformation tool from any face of the first fitting into which a said load-bearing member is inserted.

The step of ensuring termination of the zone of deformation at a location spaced from the face into which the load-bearing members are inserted is believed advantageously further to increase the crimp threshold at which damage starts to occur to the material of the load-bearing member.

In a preferred embodiment of the method of the invention, including advancing a plurality of the deformation tools, the deformation tools advance simultaneously.

In an alternative arrangement, the deformation tools advance sequentially.

Regardless of the precise order in which the deformation tools advance, the method optionally includes the additional step of moving one or more said tools generally longitudinally relative to a said load-bearing member while causing deformation of the said wall.

This step has been found to permit control of the degree of stress induced in the load-bearing members. This is beneficial during the manufacture of a surge arrester.

The method of the invention may advantageously include the step of crimping a further fitting to the or each load-bearing member at its end remote from the first fitting.

Preferably the securing of such a further fitting may occur through practising of the method steps of the invention. However, this need not necessarily be so.

Moreover the further fitting may be either of the same design as the first fitting or may be of a different design as desired.

In addition to the foregoing, the invention resides in the use of a method as defined herein in the manufacture of a surge arrester.

According to a second aspect of the invention there is provided an assembly of a surge arrester comprising a load-bearing member and a first fitting that are crimped together such that the load-bearing member lies displaced from the centroid of the cross-section of the first fitting, the load-bearing member being received in an aperture, defined by a wall, in the said fitting and the perimeter of the fitting being deformed to cause gripping engagement of the said wall with the load-bearing member, the extent of such deformation over a predetermined length thereof varying in proportion to distance around the perimeter from the load-bearing member.

Such an assembly may be manufactured according to the method of the invention. The assembly exhibits the advantages described herein in relation to the method.

Preferably the assembly comprises a plurality of load-bearing members and a first fitting that are crimped together such that one or more of the said load-bearing members lies displaced from the centroid of the cross-section of the first fitting, each load-bearing member being received in an aperture, defined by a wall, in the said fitting, the perimeter of the fitting being deformed into gripping engagement of each said wall with the load-bearing member received in the aperture defined thereby, the extent of such deformation over a predetermined length thereof varying in dependence on distance around the perimeter from the load-bearing member.

Even more preferably, the or each load-bearing member is elongate and protrudes from the said first fitting.

Conveniently over one or more predetermined length of the perimeter the extent of the deformation caused by each said deformation tool increases in proportion to its distance from, as appropriate, the said load-bearing member; or the said load-bearing member to which it is nearest.

It is also preferable that deformation of the perimeter is spaced from the face of the first fitting into which a said load-bearing member is inserted.

Advantageously the or each load-bearing member is elongate and includes a further fitting crimped thereto at its end remote from the first fitting.

The foregoing features of the assembly of the invention give rise to analogous advantages to those described in relation to the corresponding method steps defined herein.

Preferably the transverse cross-section of the fitting is a regular shape. However, the method of the invention is applicable to a wide range of fitting cross-sections. Consequently the assembly of the invention may be commensurately diverse.

In particularly preferred embodiments, the transverse cross section of the fitting is selected from the list comprising a circle, a rectangle or a regular polygon.

Alternatively, of course, the transverse cross section of the fitting may be irregular.

As used herein "transverse cross section" refers to cross-section of the fitting in the vicinity of the zones of deformation. Within the scope of the invention the assembly may include one or more fittings of non-constant cross section and including eg. flanges or other features typically in regions spaced from the zones of deformation.

In one preferred embodiment of the invention, at least one of the apertures is or includes a blind hole; an open sided slot; or a closed-sided slot.

Such an arrangement has advantages since the load-bearing members, that typically are elongate, cylindrical rods, may be inserted into the fitting from either of two sides.

However, in other embodiments at least one of the said apertures perforates the first fitting.

The precise choice of aperture type will be determined in dependence on the design of a product of which the assembly forms part; and manufacturing considerations. Combinations of different types of aperture are possible in a single fitting forming part of an assembly according to the invention.

Regardless of the aperture type chosen, the or each aperture preferably includes a mouth that is generally free of sharp-edged corners.

In other words the mouth of the aperture advantageously includes a "blended" zone that blends with the end face of the fitting. This relieves stress concentrations and thereby improves reliability of the crimp.

Preferably the or each load-bearing member is or includes fibres embedded in a matrix so as to define a rod. This is the typical load-bearing member used in the manufacture of a surge arrester.

Conveniently the fibres are or include E-glass or ECR-glass. Also conveniently the material of the matrix is or includes one or more of a vinyl ester, a polyester or an epoxy.

According to a third aspect of the invention there is provided apparatus for carrying out a method as defined herein or for manufacturing an assembly as defined herein, comprising a jig for securing a fitting; and one or more deformation tools that are advanceable towards a fitting secured in the jig and having formed therein one or more apertures each defined by a wall and each having inserted therein a load-bearing member, the or each deformation tool being capable of deforming the perimeter of the fitting to deform each said wall into gripping engagement with a said load bearing member, such that the extent of deformation of the perimeter over a predetermined length thereof varies in proportion to the distance around the said perimeter from the load-bearing member; or the nearest said load bearing member.

Preferably the apparatus includes a clamp for pressing the load bearing members and the fitting together, before deformation of the perimeter of the fitting occurs.

It is also preferable that the or each deformation tool includes a contact face for contacting the said fitting, which contact face is profiled and/or aligned relative to the said fitting so as to produce the said varying deformation.

Conveniently the or each deformation tool includes one or more contact faces. Preferably two or more of the contact faces each subtend a respective angle to a fitting secured in the jig.

Apparatus according to the invention advantageously permits the automated or semi-automated manufacture of surge arresters according to the principles disclosed herein.

The feature of two or more of the contact faces subtending a different, respective angle to a fitting secured in the jig advantageously permits the provision of a progressively increasing degree of deformation of the fitting with increasing distance, along the fitting perimeter (circumference for a cylindrical fitting), from an associated load bearing member.

Preferably a plurality of the deformation tools are advanceable simultaneously towards a fitting secured in the jig. However in an alternative arrangement a plurality of the deformation tools are sequentially advanceable towards a fitting secured in the jig.

The apparatus of the invention may optionally include a controller for controlling advancing of one or more said deformation tools.

In particularly preferred embodiments of the apparatus of the invention the controller is programmable thereby providing choice between simultaneous and sequential advancing of the deformation tools (that, typically but not necessarily are pressing dies).

The apparatus of the invention may also optionally include more than one controller and/or a controller that permits some but not all of the deformation tools to advance simultaneously.

There now follows a description of preferred embodiments of the invention, by way of non-limiting example, with reference being made to the accompanying drawing in which:

Figure 1 is a schematic, partly sectioned plan view of prior art apparatus for carrying out centred crimping;

Figure 2 is an exploded view of one *per se* known design of surge arrester;

Figure 3 is a perspective view of a fitting, forming part of a surge arrester manufactured in accordance with a prior art method;

Figure 4 shows the crimp force profile resulting from a prior art off-centre crimping technique;

Figure 5 is a schematic, partly sectioned plan view of apparatus for carrying out off-centre crimping, on a square fitting according to the method of the invention;

Figure 6 is an enlargement of part of the Figure 5 apparatus, showing in exaggerated form the profiles of the contact faces of three pressing dies;

Figure 7 is a perspective view showing one assembly according to the invention;

Figure 8 is a perspective view of a further assembly according to the invention; and

Figures 9, 10 and 11 are further views, that are similar to the Figure 6 view, showing various fitting and contact face profiles.

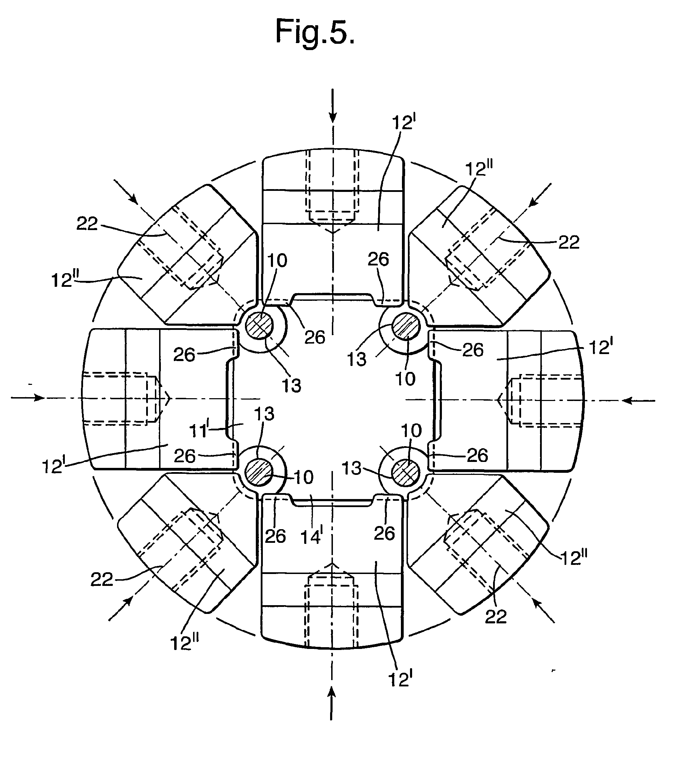

Figure 5 shows an arrangement, in accordance with the invention, for carrying out off centre crimping. In Figure 5 a square cross-section end fitting 11N is surrounded by an annular array of deformation tools in the form of side-deforming dies 12N and comer-deforming dies 120, that are moveable in order to crimp cylindrical load-bearing members in the form of surge arrester insulating rods 10. The rods 10 are shown inserted into cylindrical apertures 13 formed at the corners of one end face 14N of the end fitting 11N.

The dies 12N, 120 are such that on being advanced (eg. under pressure applied by a hydraulic ram) either sequentially or more preferably simultaneously into the fitting in the directions signified by the arrows in Figure 5, they cause non-uniform deformation of the material of the fitting 11N that defines the walls of the apertures 13.

In particular, the extent of deformation of the walls of the apertures varies over a certain length of the exterior perimeter of the end fitting 11 as measured from the diagonal mid-point of each respective aperture / rod combination 10, 13. The diagonal mid-points are denoted by the chain lines 22 in Figure 5.

In the embodiment shown, the extent of the deformation increases steadily over a short distance along the perimeter to either side of each chain line 22. This provides for a considerably more even contact pressure of the material of the wall of each aperture 13 with each respective rod 10, than is possible using prior art crimping techniques. Consequently there are fewer, and less pronounced, peaks in the crimping forces acting on the rods 10. In turn this means that higher average crimping forces are possible, without exceeding the crimp thresholds of the rods 10.

The gradual increase in the extent of deformation over the peripheral distance to either side of each chain line 22 is achieved in the Figure 5 example through the use of particular profiles of the contact faces of the dies 12N, 120.

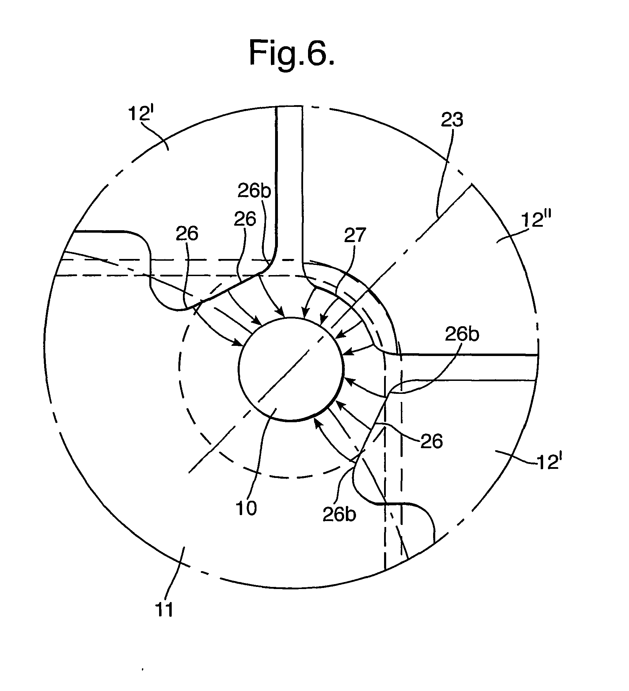

These profiles are visible in an exaggerated form in Figure 6. This shows the contact faces of three dies 12N, 120 and 12N acting on the wall of one of the apertures 13.

As is evident from Figures 5 and 6, each of the dies 12N includes a respective contact face 26 at each lateral end, whereby each die 12N on advancing acts simultaneously on two of the apertures 13. Each of the dies 120 on the other hand acts on only one of the apertures 13.

The dies 120 each have a contact face 27 that is smoothly arcuate as shown in Figure 5. The contact faces 26 of the dies 12N, on the other hand, include respective protruding and recessed portions 26a and 26b.

The portions 26a, 26b are in the embodiment shown interconnected by a flat section of the contact face 26, although in other embodiments the interconnecting section of the contact face 26 could be interrupted eg. by embossments and/or recesses.

In any event the effect of having relatively protruding and relatively recessed portions 26a, 26b of each contact face 26 is to cause the aforesaid variations in the extent of deformation over a distance along the periphery of the end fitting 11 to either side of each chain line 22. This is the result of each protruding portion 26a causing a greater amount of deformation of the metal of the end fitting 10, per increment of advancing movement of the dies 12N, than the recessed portions 26b.

The resulting deformation variations give rise to crimping forces acting evenly over a major part of the circumference of each rod 10, as signified by the arrows in Figure 6.

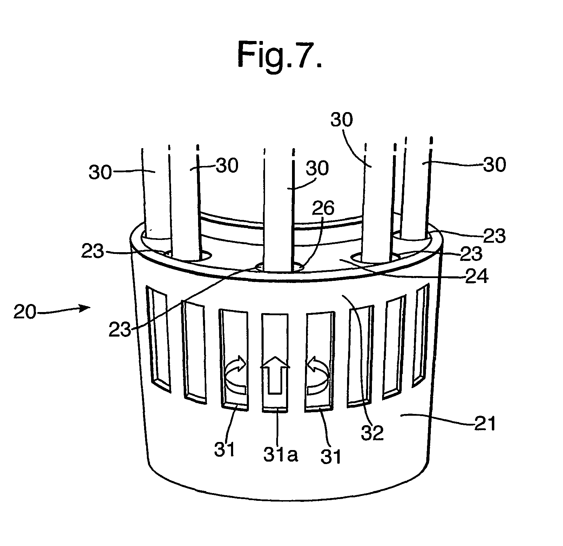

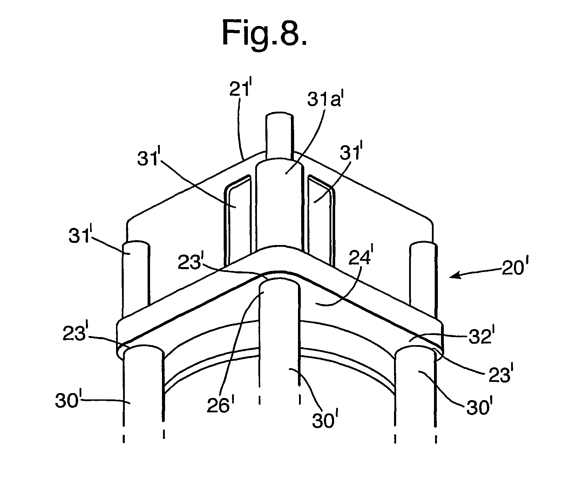

Figures 7 and 8 each show sub-assemblies 20, 20N manufactured in accordance with the invention. The Figure 8 sub-assembly is the result of operation of the Figure 5/6 apparatus.

In each of Figures 7 and 8 a plurality of load-bearing members 30, 30N is received in one of a series of respective apertures 23, 23N formed about the periphery of an end face 24, 24N of a first end fitting 21, 21N.

The walls of the apertures 23, 23N have in the embodiments shown undergone deformation into gripping engagement with the associated load-bearing member (ie. surge arrester rod) 30, 30N inserted therein.

This results in zones 31, 31N of deformation. The extent of deformation in each said zone 31, 31N varies over a predetermined length of the exterior of the fitting extending to either side of the vicinity of the associated load-bearing member 30, 30N.

More particularly, the amount or extent of deformation increases with increasing distance from the vicinity of the load-bearing member 30, 30N.

As signified respectively by numerals 31 a and 31aN, in the preferred embodiments of the invention a central die (such as die 120 of Figures 5 and 6) causes a central deformation region that is on either side flanked by respective deformation regions 31, 31N caused preferably by dies such as dies 12N of Figures 5 and 6.

In the embodiments shown the central deformation region 31a, 31aN in each case exhibits essentially uniform deformation. The regions 31, 31N, on the other hand, as noted exhibit the variations in deformation that are characteristic of the invention.

Since in the embodiments of Figures 7 and 8 the load bearing members 30, 30N respectively are offset from the centroids of the respective end faces 24, 24N, the assemblies of Figures 7 and 8 represent the result of an off-centre crimping process in accordance with the method defined herein.

In the assemblies of Figures 7 and 8 each load bearing member is elongate and protrudes from the end face 24, 24N as appropriate. This is because in the embodiments shown the assemblies each constitute one end of a respective surge arrester the opposite end of which may at the option of the designer be either similar to those shown, or of a different design. The precise details of the construction of the remainder of the surge arresters shown in Figures 7 and 8 will occur readily to the worker of skill in the relevant art.

The respective zones of the deformation 31, 31N each terminate a short distance from the faces 24, 24N of the fittings 21, 21N. This results in the presence of un-deformed bands 32, 32N. As noted the presence of such bands may advantageously increase the crimp threshold at which damage to the load-bearing members may occur when the latter are (as in the preferred embodiments shown) manufactured from glass fibre matrix material.

The transverse cross section of each fitting 21, 21N shown in Figures 7 and 8 is self-evidently a regular shape. However, irregularly shaped end fitting transverse cross sections are equally possible within the scope of the invention.

The apertures 23, 23N in the preferred embodiments are blind holes. As noted, however, other forms of aperture are possible within the scope of the invention, including but not limited to apertures that perforate the fitting; open sided slots and/or closed-sided slots.

Figures 7 and 8 additionally each show a radiused or "blended" zone 26, 26N at the mouth of each aperture 23, 23N. The purpose of such "blending" of the bore of the aperture with the end face of the fitting is to reduce stress concentrations that may arise during the crimping process.

The precise design of the apertures will occur readily to those of ordinary skill in the relevant art.

A method of manufacturing a surge arrester incorporating the assemblies shown in Figures 7 and 8 in accordance with the invention includes inserting each of the load bearing rods 30, 30N (as appropriate) into the respective apertures 23, 23N of the two end fittings of the arrester. This is done such that a stack of varistor elements (such as the elements V of Figure 2) is trapped, between the end fittings, within the cage defined by the rods 30, 30N.

The stack of varistor elements includes one or more disc springs that tend to resist longitudinal compression of the surge arrester assembly. Thus the next stage of the manufacturing process involves compressing the components of the surge arrester so as to compress the disc springs.

Thereafter the method includes advancing a plurality of deformation tools relative to each of the apertures so as to deform the aperture wall into gripping engagement with the inserted load-bearing member 30, 30N, according to the techniques described hereinabove.

Since at the time of such deformation the surge arrester is under longitudinal compression, on releasing of the compression force after the operation of the dies the disc springs place the rods 30 or 30N into tension thereby creating a robust, rigid structure.

The method of the invention includes locating the deformation tools such that the zones of deformation 31, 31N do not extend to be coterminous with the faces 24, 24N of the end fittings 21, 21N from which the load-bearing members 30, 30N protrude.

Depending on the precise choice of method adopted, the deformation tools may optionally move simultaneously or sequentially (or in combinations of sequential and simultaneous movement with respect to groups of deformation tools or dies forming part thereof). The precise sequence of advancing of the deformation tools may be determined in dependence on the precise design of fitting, load bearing member and end use of the crimped assembly 20, 20N.

Causing longitudinal movement of one or more of the deformation tools (ie. movement parallel to a respective said load-bearing member 30, 30N) may, as noted herein, provide control over the degree of tension in each load-bearing member 30, 30N within the associated aperture 23; 23N. Such a step may also provide control over the contact pressure.

Apparatus for carrying out the method of the invention or for manufacturing the assemblies such as are shown in Figures 7 and 8 may take a variety of forms. In essence such apparatus includes a clamping mechanism for securing a fitting such as fittings 21, 21N and, as desired, the stack of components making up eg. a surge arrester; and one or more deformation tools that are advanceable towards a said fitting 21, 21N secured in the jig and having inserted in the respective apertures thereof respective load-bearing members 30, 30N. The or each deformation tool is capable of deforming a wall of the or each said aperture 23, 23N such that the extent of deformation of the wall over a predetermined length thereof varies in dependence on the distance along the said length from the adjacent load-bearing member 30, 30N, in the way described herein.

The apparatus may include one or more controllers for controlling advancing of the deformation tools. Such controllers may, at the option of the apparatus designer, provide for simultaneous advancing, sequential advancing or combinations of simultaneous and sequential advancing.

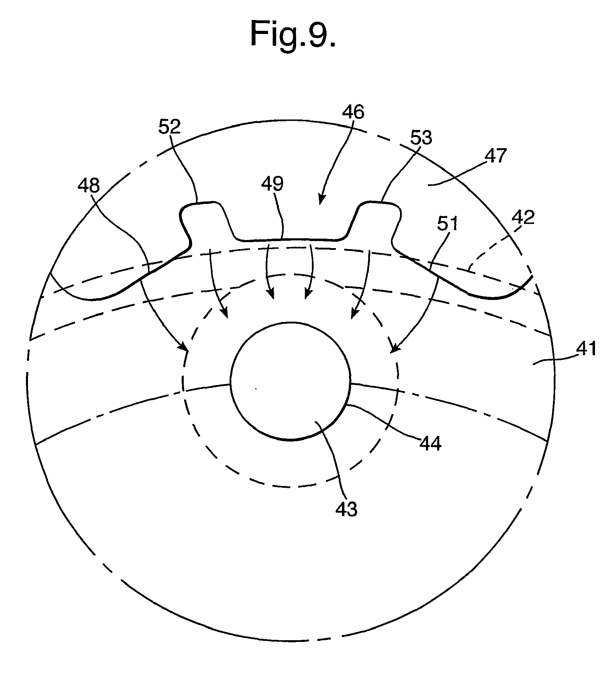

Figures 9, 10 and 11 show some variations on the die contact face and end fitting cross-section arrangements that are possible within the scope of the invention. The arrangements of Figures 9 to 11 illustrate various ways of achieving or enhancing flow of the metal of the end fittings shown therein, so as to obtain the advantages of the invention.

In Figure 9 the end fitting 41 has a smooth (arcuate) outer periphery 42 in the vicinity of the inserted rod 43 and aperture 44.

The contact face 46 of the die 47 includes three protuberances 48, 49, 51 that are spaced from one another by recesses 52, 53. The recesses 52, 53 in the embodiment shown extend parallel to the rod 43.

As signified by the arrows in Figure 9, advancing of this design of die 47 into the fitting 41 results in a generally uniform crimp pressure acting around the major part of the circumference of the rod 43.

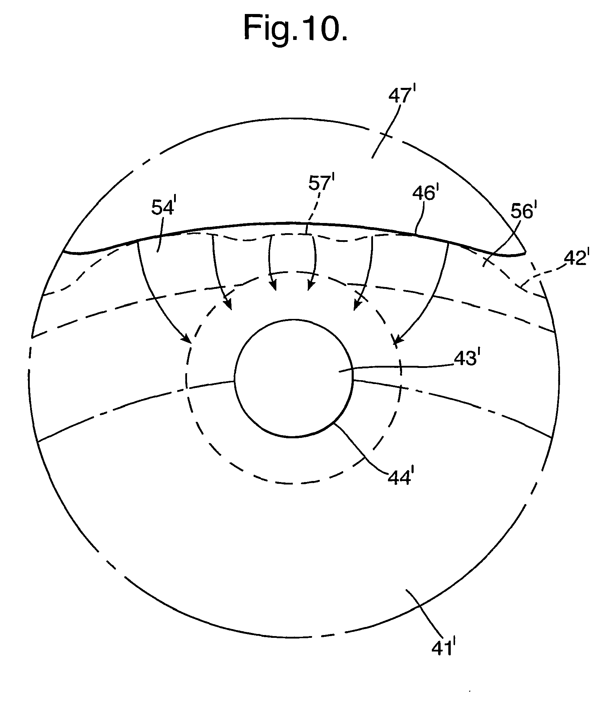

The Figure 10 arrangement differs from the Figure 9 arrangement in that the contact face 46N of the die 47N is a smooth arc that is free of pronounced protuberances and recesses.

Instead the periphery 42N of the end fitting 41N is formed with protuberances 54N, 56N that are spaced from one another by a valley 57N as shown.

The protuberances 54N, 56N provide reservoirs of metal in the end fitting 41N such that on advancing of the die 47N the reservoirs flow to cause the contact force pattern signified by the arrows in Figure 10.

As a result of the presence of the reservoirs of metal represented by the protuberances 54N, 56N, the exterior of the end fitting 41N of Figure 10 (and that of fitting 410 described below) may appear comparatively smooth following the deformation (crimping) step. However such an appearance would not in itself imply that the fitting 41N had not undergone deformation in accordance with the invention.

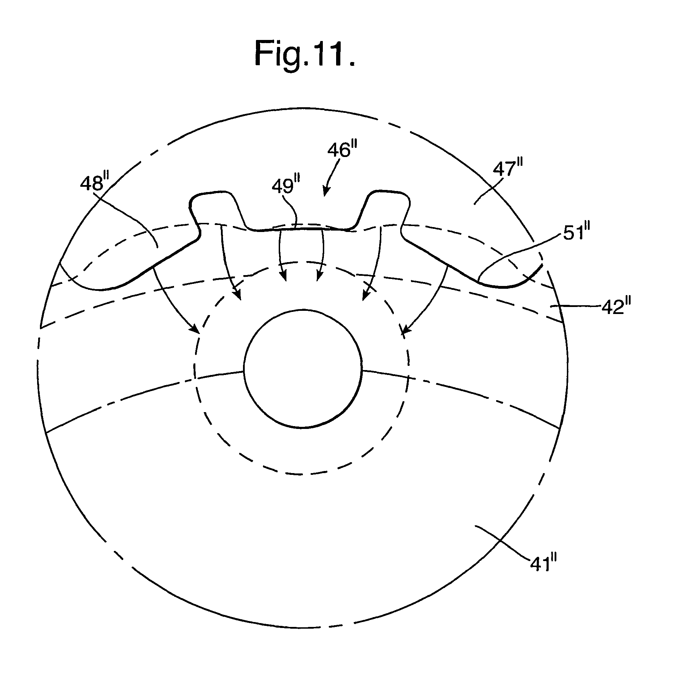

Figure 11 is a hybrid arrangement in which both the outer periphery 420 of the end fitting 410 and the contact face 460 of the die 470 have respective protuberances. Thus the contact face 460 includes protuberances 480, 490, 510 separated by recesses 520, 530; and the outer periphery 420 includes the protuberances 540, 560 and intermediate valley 570. This arrangement also results in a highly effective crimp force pattern as signified by the arrows in Figure 11.

**Claims**

1. A method of crimping a load-bearing member (10) and a fitting (11) of a surge arrester (S) together in which the load-bearing member (10) lies displaced from the centroid of the cross-section of the fitting when they have been crimped, (11) the method comprising the steps of inserting the load-bearing member (10) into an aperture (13), defined by a wall (23, 23N), in the said fitting (11); and advancing one or more deformation tools (12N, 12O) to deform the perimeter of the fitting (11) and thereby deform the wall (23, 23N) of the aperture (13) into gripping engagement with the load-bearing member (10), **characterized in that** the extent of the resulting deformation of the perimeter of the fitting (11) increases over a predetermined length of the perimeter in proportion to a distance from the said perimeter to the load-bearing member (10).

2. A method according to Claim 1, **characterized in that** the or each said deformation tool (12N, 12O) includes a contact face (26, 27) for contacting the said fitting (11), which contact face (26, 27) is profiled and/or aligned relative to the said fitting (11) so as to produce the said increasing deformation.

3. A method according to Claim 2, **characterized in that** the or each said contact face (26, 27) for contacting the said fitting (11) includes at least one protuberance (26a) that protrudes relative to a further portion (26b) thereof, whereby to cause the said increasing deformation.

4. A method according to Claim 3, **characterized in that** the contact face (26, 27) includes at least two protuberances (26a), the said protuberances (26a) being separated from one another by at least one recess.

5. A method according to Claim 3 or Claim 4, **characterized in that** the wall (23, 23N) of the aperture (13) is generally smooth in the region that is contactable by the contact face (26, 27).

6. A method according to Claim 3 or Claim 4, **characterized in that** the wall (23, 23N) of the aperture (13) includes one or more protuberances (26a) in the region that is contactable by the contact face (26, 27).

7. A method according to any preceding claim including the steps of: inserting a plurality of load-bearing members (10) into a corresponding plurality of apertures (13) in the fitting (11), defining a corresponding plurality of the walls (23, 23N); and advancing one or more deformation tools (12N, 12O) to deform the said perimeter so that the walls (23, 23N) grippingly engage with respective said load-bearing members (10), **characterized in that** the extent of the resulting deformation of the said perimeter over respective predetermined lengths thereof caused by the respective deformation tools (12N, 12O) increases in dependence on the distance along the said length from the load-bearing member (10) to which it is nearest.

8. A method according to any preceding claim, **characterized in that** the or each deformation tool (12N, 12O) is or includes a pressing die (12N).

9. A method according to any preceding claim, **characterized in that** following insertion into a said aperture (13) the or each said load-bearing member (10) partly protrudes from the said first fitting (11).

10. A method according to any preceding claim, **characterized in that** the method includes causing spacing of the deformation caused by each said deformation tool (12N, 12O) from any face of the fitting (11) into which a said load-bearing member (10) is inserted.

11. A method according to any preceding claim, **characterized in that** the method includes advancing a plurality of the deformation tools (12N, 12O), wherein the deformation tools (12N, 12O) advance simultaneously.

12. A method according to any preceding claim, **characterized in that** the method includes advancing a plurality of the deformation tools (12N, 12O), wherein the deformation tools (12N, 12O) advance sequentially.

13. A method according to any preceding claim, **characterized in that** the method includes the additional step of moving one or more said tools (12N, 12O) generally longitudinally relative to a said load-bearing member (10) while causing deformation of the said wall (23, 23N).

14. A method according to any preceding claim, **characterized in that** the or each load-bearing member (10) is elongate and the method includes crimping a further fitting (11) to the or each load-bearing member (10) at its end remote from the first fitting (11).

15. An assembly of a surge arrester (S) comprising at least one load-bearing member (10) and a fitting (11) that are crimped together such that the load-bearing member (10) lies displaced from the centroid of the cross-section of the fitting (11), the load-bearing member (10) being received in an aperture (13), defined by a wall (23, 23N), in the said fitting (11) and the perimeter of the fitting (11) being deformed to cause gripping engagement of the said wall (23, 23N) with the load-bearing member (10), **characterized in that** the extent of such deformation increases over one or more predetermined length of the perimeter in proportion to a distance from the perimeter to said at least one load-bearing member (10) or the said load-bearing member which is nearest.

16. An assembly according to Claim 15, **characterized in that** the or each load-bearing member (10) is elongate and protrudes from the said fitting (11).

17. An assembly according to any of Claims 15 or 16, **characterized in that** deformation of the perimeter is spaced from the face of the fitting (11) into which a said load-bearing member (10) is inserted.

18. An assembly according to any of Claims 15 to 17, **characterized in that** the or each load-bearing member (10) is elongate and includes a further fitting (11) crimped thereto at its end remote from the first fitting (11).

19. An assembly according to any of Claims 15 to 18, **characterized in that** the transverse cross-section of the fitting (11) is a regular shape.

20. An assembly according to any of Claims 15 to 19, **characterized in that** the transverse cross-section of the fitting (11) is selected from the list comprising substantially: a circle, a rectangle or a regular polygon.

21. An assembly according to any of Claims 15 to 20, **characterized in that** the transverse cross-section of the fitting (11) is irregular.

22. An assembly according to any of Claims 15 to 21, **characterized in that** the aperture (13) is or includes a blind hole.

23. An assembly according to any of Claims 15 to 22, **characterized in that** the aperture (13) is selected from an open-sided or a closed-sided slot.

24. An assembly according to any of Claims 15 to 21, **characterized in that** at least one said aperture (13) perforates the first fitting (11).

25. An assembly according to any of Claims 22 to 24, **characterized in that** at least one said aperture (13) includes a mouth (26, 26N) that is generally free of sharp-edged corners.

26. An assembly according to any of Claims 15 to 25, **characterized in that** the or each load-bearing member (10) is or includes fibres in a matrix so as to define a rod.

27. An assembly according to Claim 26, **characterized in that** the fibres are selected from the group including E-glass or ECR-glass.

28. An assembly according to Claim 26 or 27, **characterized in that** the material of the matrix is selected from the group including vinyl esters, polyesters or epoxy.

29. Apparatus for carrying out a method according to any of Claims 1 to 14, or for manufacturing an assembly according to any of Claims 15 to 28, comprising a jig for securing a fitting (11); and one or more deformation tools (12N, 12O) that are advanceable towards a fitting (11) secured in the jig and having formed therein one or more apertures (13) each defined by a wall (23, 23N) and each having inserted therein a load-bearing member (10), the or each deformation tool (12N, 12O) being capable of deforming the perimeter of the fitting (11) to deform each said wall (23, 23N) into gripping engagement with a said load bearing member (10), **characterized in that** the deformation tools (12N, 12O) comprise contact faces (26, 27) that are adapted to increase the extent of deformation of the perimeter over a predetermined length thereof in proportion to the distance around the said perimeter from the load-bearing member; or the nearest said load bearing member (10).

30. Apparatus according to Claim 29, **characterized in that** the apparatus includes a clamp for pressing the load bearing members (10) and the fitting (11) together, before deformation of the perimeter of the fitting (11) occurs.

31. Apparatus according to Claim 29 or Claim 30, **characterized in that** the contact faces (26, 27) for contacting the said fitting (11), are profiled and/or aligned relative to the said fitting (11) so as to produce the said increasing deformation.

32. Apparatus according to Claims 29 to 31, **characterized in that** the or each deformation tool (12N, 12O) is or includes a pressing die (12N).

33. Apparatus according to Claim 31, **characterized in that** each said contact face (26, 27) subtends a respective angle to a fitting (11) secured in the jig.

34. Apparatus according to any of Claims 29 to 33, **characterized in that** the apparatus includes a plurality of the deformation tools (12N, 12O) that are advanceable simultaneously towards a fitting (11) secured in the jig.

35. Apparatus according to any of Claims 29 to 34, **characterized in that** the apparatus includes a plurality of the deformation tools (12N, 12O) that are sequentially advanceable towards a fitting (11) secured in the jig.

36. Apparatus according to any of Claims 29 to 35, **characterized in that** the apparatus includes a controller for controlling advancing of one or more said deformation tools (12N, 12O).

**Patentansprüche**

1. Verfahren zum Zusammencrimpen eines tragenden Elements (10) und eines Anschluss-Stücks (11) eines Überspannungsableiters (S), wobei das tragende Element (10) aus dem Schwerpunkt des Querschnitts des Anschluss-Stücks (11) versetzt liegt, wenn sie gecrimpt worden sind, (11) wobei das Verfahren die Schritte umfasst, das tragende Element (10) in eine Öffnung (13), die durch eine Wand (23, 23N) in dem besagten Anschluss-Stück (11) definiert wird, einzusetzen und ein oder mehrere Verformungswerkzeuge (12N, 120) vorzuschieben, um den Perimeter des Anschluss-Stücks (11) zu verformen und dadurch die Wand (23, 23N) der Öffnung (13) in einen klemmenden Eingriff mit dem tragenden Element (10) zu verformen, **dadurch gekennzeichnet, dass** das Ausmaß der sich ergebenden Verformung des Perimeters des Anschluss-Stücks (11) über eine vorbestimmte Länge des Perimeters im Verhältnis zu einem Abstand von dem besagten Perimeter zu dem tragenden Element (10) zunimmt.

2. Verfahren nach Anspruch 1, **dadurch gekennzeichnet, dass** das oder jedes besagte Verformungswerkzeug (12N, 120) eine Berührungsfläche (26, 27) zum Berühren des besagten Anschluss-Stücks (11) umfasst, wobei die Berührungsfläche (26, 27) profiliert und/oder im Verhältnis zu dem besagten Anschluss-Stück (11) ausgerichtet ist, um so die besagte zunehmende Verformung zu erzeugen.

3. Verfahren nach Anspruch 2, **dadurch gekennzeichnet, dass** die oder jede besagte Berührungsfläche (26, 27) zum Berühren des besagten Anschluss-Stücks (11) wenigstens einen Vorsprung (26a) umfasst, der im Verhältnis zu einem weiteren Abschnitt (26b) derselben vorspringt, um dadurch die besagte zunehmende Verformung zu bewirken.

4. Verfahren nach Anspruch 3, **dadurch gekennzeichnet, dass** die Berührungsfläche (26, 27) wenigstens zwei Vorsprünge (26a) umfasst, wobei die besagten Vorsprünge (26a) durch wenigstens eine Aussparung voneinander getrennt sind.

5. Verfahren nach Anspruch 3 oder Anspruch 4, **dadurch gekennzeichnet, dass** die Wand (23, 23N) der Öffnung (13) in dem Bereich, der durch die Berührungsfläche (26, 27) berührt werden kann, im Allgemeinen glatt ist.

6. Verfahren nach Anspruch 3 oder Anspruch 4, **dadurch gekennzeichnet, dass** die Wand (23, 23N) der Öffnung (13) in dem Bereich, der durch die Berührungsfläche (26, 27) berührt werden kann, einen oder mehrere Vorsprünge (26a) umfasst.

7. Verfahren nach einem vorhergehenden Anspruch, das die folgenden Schritte umfasst: Einsetzen einer Vielzahl tragender Elemente (10) in eine entsprechende Vielzahl von Öffnungen (13) in dem Anschluss-Stück (11), die eine entsprechende Vielzahl der Wände (23, 23N) definieren; und Vorschieben eines oder mehrerer Verformungswerkzeuge (12N, 120), um den besagten Perimeter zu verformen, so dass die Wände (23, 23N) klemmend mit jeweiligen besagten tragenden Elementen (10) ineinandergreifen, **dadurch gekennzeichnet, dass** das Ausmaß der sich ergebenden Verformung des besagten Perimeters über jeweilige vorbestimmte Längen desselben, bewirkt durch die jeweiligen Verformungswerkzeuge (12N, 120), in Abhängigkeit von dem Abstand längs der besagten Länge von dem tragenden Element (10), dem sie am nächsten ist, zunimmt.

8. Verfahren nach einem vorhergehenden Anspruch, **dadurch gekennzeichnet, dass** das oder jedes Verformungswerkzeug (12N, 120) ein Press-Stempel (12N) ist oder einschließt.

9. Verfahren nach einem vorhergehenden Anspruch, **dadurch gekennzeichnet, dass** anschließend an das Einsetzen in eine besagte Öffnung (13) das oder jedes genannte tragende Element (10) teilweise aus dem besagten ersten Anschluss-Stück (11) herausragt.

10. Verfahren nach einem vorhergehenden Anspruch, **dadurch gekennzeichnet, dass** das Verfahren einschließt, einen Abstand der durch jedes genannte Verformungswerkzeug (12N, 120) bewirkten Verformung von jeglicher Stirnfläche des Anschluss-Stücks (11), in das ein besagtes tragendes Element (10) eingesetzt wird, zu bewirken.

11. Verfahren nach einem vorhergehenden Anspruch, **dadurch gekennzeichnet, dass** das Verfahren einschließt, eine Vielzahl der Verformungswerkzeuge (12N, 120) vorzuschieben, wobei sich die Verformungswerkzeuge (12N, 120) gleichzeitig vorschieben.

12. Verfahren nach einem vorhergehenden Anspruch, **dadurch gekennzeichnet, dass** das Verfahren einschließt, eine Vielzahl der Verformungswerkzeuge (12N, 120) vorzuschieben, wobei sich die Verformungswerkzeuge (12N, 120) nacheinander vorschieben.

13. Verfahren nach einem vorhergehenden Anspruch, **dadurch gekennzeichnet, dass** das Verfahren den zusätzlichen Bewegungsschritt eines oder mehrerer der besagten Werkzeuge (12N, 120) im Allgemeinen in Längsrichtung im Verhältnis zu einem besagten tragenden Element (10) einschließt, während die Verformung der besagten Wand (23, 23N) bewirkt wird.

14. Verfahren nach einem vorhergehenden Anspruch, **dadurch gekennzeichnet, dass** das oder jedes tragende Element (10) länglich ist und das Verfahren einschließt, an dessen von dem ersten Anschluss-Stück (11) entfernten Ende ein weiteres Anschluss-Stück (11) an das oder jedes tragende Element (10) zu crimpen.

**15.** Baugruppe eines Überspannungsableiters (S), die wenigstens ein tragendes Element (10) und ein Anschluss-Stück (11) umfasst, die derart zusammengecrimpt sind, dass das tragende Element (10) aus dem Schwerpunkt des Querschnitts des Anschluss-Stücks (11) versetzt liegt, wobei das tragende Element (10) in einer Öffnung (13), die durch eine Wand (23, 23N) in dem besagten Anschluss-Stück (11) definiert wird, aufgenommen ist und der Perimeter des Anschluss-Stücks (11) verformt ist, um einen klemmenden Eingriff der besagten Wand (23, 23N) mit dem tragenden Element (10) zu bewirken, **dadurch gekennzeichnet, dass** das Ausmaß einer solchen Verformung über eine oder mehrere vorbestimmte Längen des Perimeters im Verhältnis zu einem Abstand von dem Perimeter zu dem besagten wenigstens einen tragenden Element (10) oder dem besagten tragenden Element, dem sie am nächsten ist, zunimmt.

**16.** Baugruppe nach Anspruch 15, **dadurch gekennzeichnet, dass** das oder jedes tragende Element (10) länglich ist und aus dem besagten Anschluss-Stück (11) herausragt.

**17.** Baugruppe nach einem der Ansprüche 15 oder 16, **dadurch gekennzeichnet, dass** die Verformung des Perimeters mit Abstand von der Stirnfläche des Anschluss-Stücks (11), in die das besagte tragende Element (10) eingesetzt ist, angeordnet ist.

**18.** Baugruppe nach einem der Ansprüche 15 bis 17, **dadurch gekennzeichnet, dass** das oder jedes tragende Element (10) länglich ist und ein weiteres Anschluss-Stück (11) umfasst, das an seinem von dem ersten Anschluss-Stück (11) entfernten Ende an dasselbe gecrimpt ist.

**19.** Baugruppe nach einem der Ansprüche 15 bis 18, **dadurch gekennzeichnet, dass** der Querschnitt des Anschluss-Stücks (11) eine regelmäßige Form hat.

**20.** Baugruppe nach einem der Ansprüche 15 bis 19, **dadurch gekennzeichnet, dass** der Querschnitt des Anschluss-Stücks (11) aus der Liste ausgewählt ist, die im Wesentlichen umfasst: einen Kreis, ein Rechteck oder ein regelmäßiges Vieleck.

**21.** Baugruppe nach einem der Ansprüche 15 bis 20, **dadurch gekennzeichnet, dass** der Querschnitt des Anschluss-Stücks (11) unregelmäßig ist.

**22.** Baugruppe nach einem der Ansprüche 15 bis 21, **dadurch gekennzeichnet, dass** die Öffnung (13) ein Sackloch ist oder einschließt.

**23.** Baugruppe nach einem der Ansprüche 15 bis 22, **dadurch gekennzeichnet, dass** die Öffnung (13) aus einem offenseitigen oder einem geschlossenseitigen Schlitz ausgewählt ist.

**24.** Baugruppe nach einem der Ansprüche 15 bis 21, **dadurch gekennzeichnet, dass** die wenigstens eine besagte Öffnung (13) das erste Anschluss-Stück (11) perforiert.

**25.** Baugruppe nach einem der Ansprüche 22 bis 24, **dadurch gekennzeichnet, dass** die wenigstens eine besagte Öffnung (13) eine Mündung (26, 26N) einschließt, die im Allgemeinen frei von scharfkantigen Ekken ist.

**26.** Baugruppe nach einem der Ansprüche 15 bis 25, **dadurch gekennzeichnet, dass** das oder jedes tragende Element (10) Fasern in einer Matrix ist oder einschließt, so dass ein Stab definiert wird.

**27.** Baugruppe nach Anspruch 26, **dadurch gekennzeichnet, dass** die Fasern aus der Gruppe ausgewählt sind, die E-Glas oder ECR-Glas einschließt.

**28.** Baugruppe nach Anspruch 26 oder 27, **dadurch gekennzeichnet, dass** der Werkstoff der Matrix aus der Gruppe ausgewählt ist, die Vinylester, Polyester oder Epoxidharz einschließt.

**29.** Vorrichtung zum Ausführen eines Verfahrens nach einem der Ansprüche 1 bis 14 oder zum Fertigen einer Baugruppe nach einem der Ansprüche 15 bis 28, umfassend eine Spannvorrichtung zum Befestigen eines Anschluss-Stücks (11); und ein oder mehrere Verformungswerkzeuge (12N, 120), die zu einem Anschluss-Stück (11) hin vorgeschoben werden können, das in der Spannvorrichtung befestigt ist und in dem eine oder mehrere Öffnungen (13) geformt sind, von denen jede durch eine Wand (23, 23N) definiert ist und in jede ein tragendes Element (10) eingesetzt hat, wobei das oder jedes Verformungswerkzeug (12N, 120) dazu in der Lage ist, den Perimeter des Anschluss-Stücks (11) zu verformen, um jede besagte Wand (23, 23N) in einen einklemmenden Eingriff mit dem besagten tragenden Element (10) zu verformen, **dadurch gekennzeichnet, dass** die Verformungswerkzeuge (12N, 120) Berührungsflächen (26, 27) umfassen, die dafür angepasst sind, das Ausmaß der Verformung des Perimeters über eine vorbestimmte Länge desselben im Verhältnis zu dem Abstand um den besagten Perimeter von dem tragenden Element oder dem nächsten besagten tragenden Element (10) zu steigern.

**30.** Vorrichtung nach Anspruch 29, **dadurch gekenn-**

**zeichnet, dass** die Vorrichtung eine Klemme einschließt, um die tragenden Elemente (10) und das Anschluss-Stück (11) zusammenzupressen, bevor die Verformung des Perimeter des Anschluss-Stücks (11) erfolgt.

**31.** Vorrichtung nach Anspruch 29 oder Anspruch 30, **dadurch gekennzeichnet, dass** die Berührungsflächen (26, 27) zum Berühren des besagten Anschluss-Stücks (11) profiliert und/oder relativ zu dem besagten Anschluss-Stück (11) ausgerichtet sind, um so die besagte zunehmende Verformung zu erzeugen.

**32.** Vorrichtung nach Anspruch 29 bis 31, **dadurch gekennzeichnet, dass** das oder jedes Verformungswerkzeug (12N, 120) ein Press-Stempel (12N) ist oder denselben umfasst.

**33.** Vorrichtung nach Anspruch 31, **dadurch gekennzeichnet, dass** jede besagte Berührungsfläche (26, 27) einen jeweiligen Winkel zu einem in der Spannvorrichtung befestigten Anschluss-Stück (11) begrenzt.

**34.** Vorrichtung nach einem der Ansprüche 29 bis 33, **dadurch gekennzeichnet, dass** die Vorrichtung eine Vielzahl der Verformungswerkzeuge (12N, 120) umfasst, die gleichzeitig zu einem in der Spannvorrichtung befestigten Anschluss-Stück (11) hin vorgeschoben werden können.

**35.** Vorrichtung nach einem der Ansprüche 29 bis 34, **dadurch gekennzeichnet, dass** die Vorrichtung eine Vielzahl der Verformungswerkzeuge (12N, 120) umfasst, die nacheinander zu einem in der Spannvorrichtung befestigten Anschluss-Stück (11) hin vorgeschoben werden können.

**36.** Vorrichtung nach einem der Ansprüche 29 bis 35, **dadurch gekennzeichnet, dass** die Vorrichtung ein Steuergerät umfasst, um das Vorschieben des einen oder der besagten mehreren Verformungswerkzeuge (12N, 120) zu steuern.

## Revendications

**1.** Procédé d'assemblage par sertissage d'un élément de support de la charge (10) et d'un raccord (11) d'un dispositif de protection contre les surtensions (S), dans lequel l'élément de support de la charge (10) est déplacé du centre de gravité de la section transversale du raccord après le sertissage (11), le procédé comprenant les étapes d'insertion de l'élément de support de la charge (10) dans une ouverture (13), définie par une paroi (23, 23N) dans ledit raccord (11) ; et d'avance d'un ou de plusieurs outils de déformation (12N, 120) pour déformer le périmètre du raccord (11) et pour déformer ainsi la paroi (23, 23N) de l'ouverture (13), en vue d'un engagement par accrochage dans l'élément de support de la charge (10), **caractérisé en ce que** l'étendue de la déformation résultante du périmètre du raccord (11) est accrue au-delà d'une longueur prédéterminée du périmètre, de manière proportionnelle à une distance entre ledit périmètre et l'élément de support de la charge (10).

**2.** Procédé selon la revendication 1, **caractérisé en ce que** le ou chaque dit outil de déformation (12N, 120) englobe une face de contact (26, 27) destinée à contacter ledit raccord (11), ladite face de contact (26, 27) étant profilée et/ou alignée par rapport audit raccord (11), de sorte à entraîner ladite déformation croissante.

**3.** Procédé selon la revendication 2, **caractérisé en ce que** la ou chaque dite face de contact (26, 27), destinée à contacter ledit raccord (11), englobe au moins une protubérance (26a) débordant d'une partie additionnelle (26b), pour entraîner ainsi ladite déformation croissante.

**4.** Procédé selon la revendication 3, **caractérisé en ce que** la face de contact (26, 27) englobe au moins deux protubérances (26a), lesdites protubérances (26a) étant séparées l'une de l'autre par au moins un évidement.

**5.** Procédé selon les revendications 3 ou 4, **caractérisé en ce que** la paroi (23, 23N) de l'ouverture (13) est généralement lisse dans la région pouvant être contactée par la face de contact (26, 27).

**6.** Procédé selon les revendications 3 ou 4, **caractérisé en ce que** la paroi (23, 23N) de l'ouverture (13) englobe une ou plusieurs protubérances (26a) dans la région pouvant être contactée par la face de contact (26, 27).

**7.** Procédé selon une quelconque revendication précédente, englobant les étapes ci-dessous : insertion d'une pluralité d'éléments de support de la charge (10) dans une pluralité d'ouvertures (13) correspondante dans le raccord (11), définition de plusieurs parois (23, 23N) correspondantes ; et avance d'un ou de plusieurs outils de déformation (12N, 120) pour déformer ledit périmètre, de sorte que les parois (23, 23N) s'engagent par accrochage dans lesdits éléments de support de la charge (10) respectifs, **caractérisé en ce que** l'étendue de la déformation résultante dudit périmètre au-delà de longueurs prédéterminées de celui-ci, entraînée par les outils de déformation respectifs (12N, 120), est accrue en fonction de la distance le long de ladite longueur de l'élément de support de la charge (10) le plus proche.

8. Procédé selon une quelconque revendication précédente, **caractérisé en ce que** le ou chaque outil de déformation (12N, 12O) est constitué par une matrice de pressage (12N) ou englobe une telle matrice de pressage.

9. Procédé selon une quelconque revendication précédente, **caractérisé en ce qu'**après l'insertion dans une dite ouverture (13), le ou chaque dit élément de support de la charge (10) déborde en partie dudit premier raccord (11).

10. Procédé selon une quelconque revendication précédente, **caractérisé en ce que** le procédé englobe l'étape d'établissement d'un espacement de la déformation, entraînée par chaque dit outil de déformation (12N, 12O), d'une quelconque face du raccord (11) dans lequel un dit élément de support de la charge (10) est inséré.

11. Procédé selon une quelconque revendication précédente, **caractérisé en ce que** le procédé englobe l'étape d'avance de plusieurs outils de déformation (12N, 120), dans lequel les outils de déformation (12N, 120) sont avancés de manière simultanée.

12. Procédé selon une quelconque revendication précédente, **caractérisé en ce que** le procédé englobe l'étape d'avance de plusieurs outils de déformation (12N, 120), dans lequel les outils de déformation (12N, 120) sont avancés de manière séquentielle.

13. Procédé selon une quelconque revendication précédente, **caractérisé en ce que** le procédé englobe l'étape additionnelle de déplacement d'un ou de plusieurs dits outils (12N, 120), en général de manière longitudinale par rapport audit élément de support de la charge (10), tout en entraînant la déformation de ladite paroi (23, 23N).

14. Procédé selon une quelconque revendication précédente, **caractérisé en ce que** le ou chaque élément de support de la charge (10) est allongé et le procédé englobe la fixation par sertissage d'un raccord (11) additionnel sur le ou chaque élément de support de la charge (10), au niveau de son extrémité éloignée du premier raccord (11).

15. Assemblage d'un dispositif de protection contre les surtensions (S), comprenant au moins un élément de support de la charge (10) et un raccord (11) assemblés par sertissage, de sorte que l'élément de support de la charge (10) est déplacé du centre de gravité de la section transversale du raccord (11), l'élément de support de la charge (10) étant reçu dans une ouverture (13) définie par une paroi (23, 23N) dans ledit raccord (11), et le périmètre du raccord (11) étant déformé pour entraîner un engagement par accrochage de ladite paroi (23, 23N) dans l'élément de support de la charge (10), **caractérisé en ce que** l'étendue de cette déformation est accrue au-delà d'une ou de plusieurs longueurs prédéterminées du périmètre, de manière proportionnelle à une distance entre le périmètre et ledit au moins un élément de support de la charge (10) ou ledit élément de support de la charge le plus proche.

16. Assemblage selon la revendication 15, **caractérisé en ce que** le ou chaque élément de support de la charge (10) est allongé et déborde dudit raccord (11).

17. Assemblage selon l'une quelconque des revendications 15 ou 16, **caractérisé en ce que** la déformation du périmètre est espacée de la face du raccord (11) dans lequel un dit élément de support de la charge (10) est inséré.

18. Assemblage selon l'une quelconque des revendications 15 à 17, **caractérisé en ce que** le ou chaque élément de support de la charge (10) est allongé et englobe un raccord additionnel (11) qui y est fixé par sertissage, au niveau de son extrémité éloignée du premier raccord (11).

19. Assemblage selon l'une quelconque des revendications 15 à 18, **caractérisé en ce que** la section transversale du raccord (11) a une forme régulière.

20. Assemblage selon l'une quelconque des revendications 15 à 19, **caractérisé en ce que** la section transversale du raccord (11) est sélectionnée dans le groupe constitué pour l'essentiel : d'un cercle, d'un rectangle ou d'un polygone régulier.

21. Assemblage selon l'une quelconque des revendications 15 à 20, **caractérisé en ce que** la section transversale du raccord (11) est irrégulière.

22. Assemblage selon l'une quelconque des revendications 15 à 21, **caractérisé en ce que** l'ouverture (13) est constituée par un trou borgne ou englobe un tel trou borgne.

23. Assemblage selon l'une quelconque des revendications 15 à 22, **caractérisé en ce que** l'ouverture (13) est sélectionnée parmi une fente à côtés ouverts ou à côtés fermés.

24. Assemblage selon l'une quelconque des revendications 15 à 21, **caractérisé en ce qu'**au moins une dite ouverture (13) perfore le premier raccord (11).

25. Assemblage selon l'une quelconque des revendications 22 à 24, **caractérisé en ce qu'**au moins une dite ouverture (13) englobe une embouchure (26, 26N) généralement exempte de coins à arêtes vives.

26. Assemblage selon l'une quelconque des revendications 15 à 25, **caractérisé en ce que** le ou chaque élément de support de la charge (10) est constitué par des fibres dans une matrice, ou englobe celles-ci, de sorte à définir une tige.

27. Assemblage selon la revendication 26, **caractérisé en ce que** les fibres sont sélectionnées dans le groupe constitué de fibres de verre E ou de verre ECR.

28. Assemblage selon les revendications 26 ou 27, **caractérisé en ce que** le matériau de la matrice est sélectionné dans le groupe constitué d'esters de vinyle, de polyesters ou d'époxyde.

29. Appareil servant à exécuter un procédé selon l'une quelconque des revendications 1 à 14, ou à fabriquer un assemblage selon l'une quelconque des revendications 15 à 28, comprenant un dispositif de fixation pour fixer un raccord (11) ; et un ou plusieurs outils de déformation (12N, 12O), pouvant être avancés vers un raccord (11) fixé dans le dispositif de fixation, et comportant là-dedans une ou plusieurs ouvertures (13), définies chacune par une paroi (23, 23N), et comportant là-dedans chacune un élément de support de la charge (10) qui y est inséré, le ou chaque outil de déformation (12N, 12O) pouvant déformer le périmètre du raccord (11) pour déformer chaque dite paroi (23, 23N), en vue d'un engagement par accrochage dans un dit élément de support de la charge (10), **caractérisé en ce que** les outils de déformation (12N, 12O) comprennent des faces de contact (26, 27), adaptées pour accroître l'étendue de la déformation du périmètre au-delà d'une longueur prédéterminée de celui-ci, de manière proportionnelle à la distance autour dudit périmètre de l'élément de support de la charge, ou dudit élément de support de la charge le plus proche (10).

30. Appareil selon la revendication 29, **caractérisé en ce que** l'appareil englobe une bride de serrage pour assembler par pression les éléments de support de la charge (10) et le raccord (11) avant que la déformation du périmètre du raccord (11) se passe.

31. Appareil selon les revendications 29 ou 30, **caractérisé en ce que** les faces de contact (26, 27), destinées à contacter ledit raccord (11), sont profilées et/ou alignées par rapport audit raccord (11), de sorte à entraîner ladite déformation croissante.

32. Appareil selon les revendications 29 à 31, **caractérisé en ce que** le ou chaque outil de déformation (12N, 12O) est constitué par une matrice de pressage (12N) ou englobe une telle matrice de pressage.

33. Appareil selon la revendication 31, **caractérisé en ce que** chaque dite face de contact (26, 27) délimite un angle respectif par rapport à un raccord (11) fixé dans le dispositif de fixation.

34. Appareil selon l'une quelconque des revendications 29 à 33, **caractérisé en ce que** l'appareil englobe plusieurs outils de déformation (12N, 12O), pouvant être avancés de manière simultanée vers un raccord (11) fixé dans le dispositif de fixation.

35. Appareil selon l'une quelconque des revendications 29 à 34, **caractérisé en ce que** l'appareil englobe plusieurs outils de déformation (12N, 12O), pouvant être avancés de manière séquentielle vers un raccord (11) fixé dans le dispositif de fixation.

36. Appareil selon l'une quelconque des revendications 29 à 35, **caractérisé en ce que** l'appareil englobe un moyen de commande pour contrôler l'avance d'un ou de plusieurs dits outils de déformation (12N, 12O).

# Fig.1.

Fig.2.

EP 1 776 200 B1

# Fig.3.

# Fig.4.

# Fig.5.

# Fig.6.

# Fig.7.

# Fig.8.

# Fig.9.

# Fig.10.

# Fig.11.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5680289 A

- WO 0115292 A